# EUROPEAN PATENT APPLICATION

(11) **EP 1 944 601 A1**
(43) Date of publication of application: **16.07.2008**
(21) Application number: 07270003.2
(22) Date of filing: 09.01.2007
(51) Int. Cl.: G01N 21/90, G01N 21/94

(54) **Optical fluid assessment apparatus**

(71) Applicant: STMicroelectronics (Research & Development) Limited, Marlow, Buckinghamshire SL7 1YL (GB)
(72) Inventor: Richardson, Justin, Edinburgh, Lothian EH3 5QP (GB)
(74) Representative: McBride, Peter Hill

(57) **Abstract**

The present invention relates to an optical fluid assessment apparatus and method comprising an image sensor, wherein the image sensor is in optical contact with the fluid and a fluid image is taken and one or more representative values are calculated; an analysis means to assess the one or more representative values against one or more pre-determined values; and an output means to provide a result of the analysis means. The apparatus may assess the fluid by comparison to a reference fluid in which both fluids are illuminated by a light source. The invention is particularly applicable to assessing the degradation of lubrication and hydraulic fluids and for the assessment of the concentration of mixtures of fluids.

## Description

The present invention related to an optical fluid assessment apparatus and particularly, but not exclusively, to an optical fluid assessment apparatus for determining the ratio of a mixture of two fluids or a mixture of a fluid and a solid.

Most machines, and in particular vehicle engines, use lubrication oils which, during use, become contaminated with particles. Furthermore, hydraulic systems, such as, brake, clutch and power steering systems, can suffer from moisture ingress and becoming contaminated with particles. Ultimately, these fluids require replacement once they are contaminated to a certain degree. Currently, the fluids are generally replaces at regular intervals determined by either the time since the last change or the operating time of the machinery. However, in many instances the fluids are being replaced when they are still in a perfectly good condition to be used for a further period. On the other hand, it may be that, for one reason or another, the fluid is contaminated ahead of the scheduled change and potentially could have damaging effects to the engine or system.

In addition, the ratio of mixtures of fluids are often judged by colour cards. That is, the colour of the mixture is compared to a series of colours on a ratio card. The ratio of the mixture is then decided by the closer match to the ratio card. A test such as this is both time consuming and subjective for the person who is required to carry out the test. Furthermore, prevailing light conditions can have a serious effect on the accuracy of the test.

According to a first aspect of the present invention there is provided an optical fluid assessment apparatus comprising:
an image sensor, wherein the image sensor is in optical contact with the fluid and a fluid image is taken and one or more representative values are calculated;
an analysis means to assess the one or more representative values against one or more pre-determined values; and
an output means to provide a result of the analysis means.

Preferably, a reference image is taken of a reference fluid.

Alternatively, a reference image is available from stored data.

Preferably, a correlated double sample means is performed between the reference image and the fluid image producing a difference image providing the one or more representative values.

Preferably, the apparatus comprises a member, the image sensor being located at a first end of the member.

Preferably, the member comprises a reference chamber sealed from the fluid.

Preferably, a portion of the image sensor is dedicated to providing the reference image of the correlated double sample means,

Preferably, the member further comprises a fluid cavity which allows the ingress of fluid.

Preferably, the apparatus further comprises a light source to provide illumination of the fluid.

Preferably, the light source is located distal to the image sensor.

According to a second aspect of the present invention there is provided a method of optically assessing a fluid comprising:
capturing an image of the fluid with an image sensor;
calculating one or more representative values from the image;
analysing the one or more representative values by assessing against one or more pre-determined values; and
outputting a result of the analysis.

Preferably, the method further comprises the step of capturing a reference image of a reference fluid.

Alternatively, the method further comprises the step of retrieving a reference image is available from stored data.

Preferably, the method comprises the step of performing correlated double sampling between the reference image and the fluid image producing a difference image providing the one or more representative values.

Preferably, the method comprises the step of illuminating the fluid.

Preferably, the method comprises the step of illuminating the reference fluid.

Embodiments of the present invention will now be described, by way of example only, with reference to the accompanying drawing, in which;

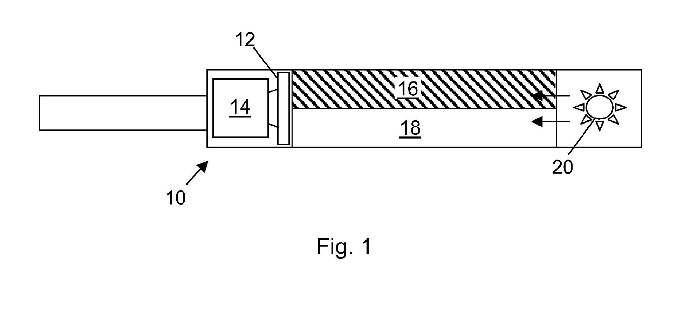

Fig. 1 illustrates an optical fluid assessment apparatus according to the present invention.

Typically, fluids are serviced, usually by replacement at intervals irrespective of their condition. The present invention allows for assessment of the fluid in question before servicing. Furthermore, degradation of fluids beyond acceptable limits can cause damage before a scheduled service point and often goes unnoticed until a knock on effect is experienced. This leads to early equipment failure, sometimes catastrophic for both the equipment or indeed the user. As such, the present invention could be interfaced to existing vehicle management systems to alert vehicle users to degradation of a fluid, as well as a service mechanic assessment aid.

Referring to Fig. 1, an optical fluid assessment apparatus 10, which in this case is an electronic dipstick, comprising an image sensor 12, a processing means 14, a first chamber 16, a second chamber 18 and a light source 20. The processing means 14 having a correlated double sample means, a comparison means and a data store.

During operation, the dipstick 10 is inserted into the fluid that is being assessed. The first chamber 16 allows ingress of the fluid into the chamber through one or more apertures (not shown). Alternatively, the first chamber 16 can be a cavity in the dipstick 10, which also allows the ingress of fluid. The second chamber 18 contains a reference fluid. This can be, for example, air or a uncontaminated sample of the fluid being assessed. The light source 20 is optically connected to the first and second chambers 16, 18 and therefore illuminates the fluid in the first and second chambers 16, 18.

The image sensor 12 is also optically connected to the first and second chambers 16, 18. A first image is captured of the first chamber 16 and a second image is captured of the second chamber 18. This can either be performed by having an image sensor over each chamber or by a single image sensor over both chambers. Where a single image sensor is used, the captured image can be separated electronically into each chamber.

A correlated double sample can be performed by using the two images thereby producing a single difference image representing the difference between the two images.

The difference image can then be compared with pre-determined acceptable ranges to identify whether the fluid is within parameters.

The present invention can also be used to assess fluid mixtures in a similar manner. The concentration of a mixture is often assessed by colour or opaqueness. Therefore, the present invention can be employed, using the apparatus described above, to assess the concentration of a mixture simply by altering the pre-determined acceptable range of values.

Improvements and modifications may be incorporated without departing from the scope of the present invention.

## Claims

1. An optical fluid assessment apparatus comprising:
an image sensor, wherein the image sensor is in optical contact with the fluid and a fluid image is taken and one or more representative values are calculated;
an analysis means to assess the one or more representative values against one or more pre-determined values; and
an output means to provide a result of the analysis means.

2. An apparatus as claimed in claim 1, wherein a reference image is taken of a reference fluid.

3. An apparatus as claimed in claim 1, wherein a reference image is available from stored data.

4. An apparatus as claimed in claim 2 or 3, wherein a correlated double sample means is performed between the reference image and the fluid image producing a difference image providing the one or more representative values.

5. An apparatus as claimed in claim 4, wherein a portion of the image sensor is dedicated to providing the reference image of the correlated double sample means,

6. An apparatus as claimed in any of claims 1 to 5, wherein the apparatus comprises a member, the image sensor being located at a first end of the member.

7. An apparatus as claimed in claim 6, wherein the member comprises a reference chamber sealed from the fluid.

8. An apparatus as claimed in claim 6 or claim 7, wherein the member comprises a fluid cavity which allows the ingress of fluid.

9. An apparatus as claimed in any of claims 1 to 8, wherein the apparatus further comprises a light source to provide illumination of the fluid.

10. An apparatus as claimed in claim 9, wherein the light source is located distal to the image sensor.

11. A method of optically assessing a fluid comprising:
capturing an image of the fluid with an image sensor;
calculating one or more representative values from the image;
analysing the one or more representative values by assessing against one or more pre-determined values; and
outputting a result of the analysis.

12. A method as claimed in claim 11, further comprising the step of capturing a reference image of a reference fluid.

13. A method as claimed in claim 11, further comprising the step of retrieving a reference image is available from stored data.

14. A method as claimed in claim 12 or 13, wherein the method comprises the step of performing correlated double sampling between the reference image and the fluid image producing a difference image providing the one or more representative values.

15. A method as claimed in any of claims 11 to 15, wherein the method comprises the step of illuminating the fluid.

16. A method as claimed in any of claims 12 to 14, wherein the method comprises the step of illuminating the reference fluid.
